# EUROPÄISCHE PATENTSCHRIFT

(11) **EP 2 488 282 B1**
(45) Veröffentlichungstag und Bekanntmachung des Hinweises auf die Patenterteilung: **11.11.2015**
(21) Anmeldenummer: 10760616.2
(22) Anmeldetag: 01.10.2010
(51) Int. Cl.: B01D 53/26

(54) **VORRICHTUNG ZUM TROCKNEN EINES MEDIENSTROMS**
DEVICE FOR DRYING A MEDIA STREAM
APPAREIL À SECHER UN COURANT DE MEDIA

(30) Priorität: 16.10.2009 DE 102009049546
(43) Veröffentlichungstag der Anmeldung: 22.08.2012
(73) Patentinhaber: Hydac Filtertechnik GmbH, 66280 Sulzbach/Saar (DE)
(72) Erfinder: BACKES, Volker, 66646 Marpingen (DE); PFEIFFER, Achim, 66299 Friedrichsthal (DE); WEBER, Jan, 66113 Saarbrücken (DE)
(74) Vertreter: Bartels, Martin Erich Arthur
(86) Internationale Anmeldenummer: PCT/EP2010/006009
(87) Internationale Veröffentlichungsnummer: WO 2011/044992

(56) Entgegenhaltungen:
- WO-A1-2007/106958
- WO-A2-2005/089237
- US-A- 3 972 129
- US-A1- 2008 148 937

## Beschreibung

Die Erfindung betrifft eine Vorrichtung zum Trocknen eines Medienstroms, insbesondere eines Luftstromsgemäß der Merkmalsausgestaltung des Oberbegriffes des Patentanspruches 1.

Vergleichbare Vorrichtungen sind aus der WO 2007/106958 A1, US 2008/148937 A1 und US 3,972,129 A bekannt und kommen insbesondere dann zum Einsatz, wenn einem Behälter ein Luftstrom von außen zuzuführen ist und dabei vermieden werden soll, dass Feuchtigkeit in den Behälter eindringt. In einem solchen Behälter kann sich beispielsweise Hydrauliköl zur Versorgung einer hydraulischen Anlage befinden. Das Eindringen von Feuchtigkeit in den Behälter kann zu einer Leistungsreduzierung oder gar Schädigung der angeschlossenen Anlage führen. Für das Zuführen eines Luftstroms von außen ist an gattungsgemäßen Vorrichtungen eine Einlasseinrichtung vorgesehen, so dass beispielsweise bei einem Absenken des Niveaus eines in dem Behälter eingebrachten Mediums Luft von außen über die Vorrichtung dem Behälter zuführbar ist. Ein Absenken des Mediums im Behälter kann beispielsweise durch Entnahme des Mediums erfolgen. Für den umgekehrten Fall, nämlich dass das Niveau des Mediums im Behälter ansteigt und dementsprechend Luftstrom aus dem Behälter nach außen abzuführen ist, ist bei gattungsgemäßen Vorrichtungen oftmals eine die Einlasseinrichtung ergänzende Auslasseinrichtung vorgesehen.

Regelmäßig kommen in derartigen Vorrichtungen zum Trocknen sogenannte Trocknungsmittel zum Einsatz, die jedoch jedes für sich genommen nur jeweils einen speziellen bevorzugten Einsatzbereich abdecken, insbesondere in Abhängigkeit von der Feuchtesituation, Temperatur und Zusammensetzung des zu trocknenden Medienströms. Je nach Einsatzgebiet ist daher im Stand der Technik ein jeweils möglichst gut geeignetes Trocknungsmittel auszuwählen, um einen beabsichtigten Effekt zu erzielen.

So offenbart die DE 100 31 004 B4 eine Vorrichtung zum Belüften von Behältern mit adsorptiv getrockneter Luft, bei dem in einem Behältnis als adsorbierendes Mittel Aluminiumoxid eingebracht ist. Es erfolgt eine Luftzuführung von außen durch das adsorbierende Mittel hindurch in einen anzuschließenden Behälter hinein, aus welchem eine Luftabführung nach außen ebenfalls ermöglicht ist. Durch eine Anordnung mehrerer Rückschlagventile ist bei der bekannten Lösung gewährleistet, dass das Behältnis mit dem Luftfeuchtigkeit adsorbierenden Mittel nur bei wirksamer Luftzuführung und nicht bei wirksamer Luftabführung mit Luft beaufschlagt wird. Insbesondere sofern sich in dem angeschlossenen Behälter Hydrauliköl befindet, würde das adsorbierende Mittel in seiner Wirksamkeit eingeschränkt werden, sofern es von Öldämpfen abgeführter Luft durchströmt würde.

Aus der EP 0 135 006 A2 ist ebenfalls eine Vorrichtung zum Belüften mit getrockneter Luft bekannt, bei der als Trocknungsmittel ein Silicagel in einem Behältnis eingebracht ist, das über ein Staubfilter von außen her mit Luft angeströmt wird, welche nach Durchlaufen des Trocknungsmittels einem Medienleiter zugeführt wird, der mit einem angeschlossenen Behälter kommuniziert.

Ausgehend von dem genannten Stand der Technik stellt sich der Erfindung die Aufgabe, eine Vorrichtung zum Trocknen eines Medienstroms bereitzustellen, die bei einfacher Handhabung kostengünstig herstellbar und insbesondere an die unterschiedlichsten Anforderungen beim Trocknen eines Medienstroms in einfacher Weise anpassbar ist.

Die Aufgabe ist durch eine Vorrichtung zum Trocknen eines Medienstroms nach Anspruch 1 gelöst. Besondere Ausführungsformen der Erfindung sind Gegenstand der abhängigen Patentansprüche.

Gemäß dem Kennzeichen von Anspruch 1 ist vorgesehen, dass in dem Aufnahmeraum mindestens eine von dem Medienstrom durchströmbare Trenneinrichtung zum Trennen der mindestens zwei Trocknungsmittel angeordnet ist und dass die mindestens eine Trenneinrichtung in dem Aufnahmeraum wählbar anordenbar ist und dergestalt den Aufnahmeraum in mindestens zwei Aufnahmevolumina zur jeweiligen Aufnahme der mindestens zwei Trocknungsmittel aufteilt

Die erfindungsgemäße Vorrichtung zum Trocknen eines Medienstroms, insbesondere eines Luftstroms, weist ein Vorrichtungsgehäuse auf, in den mindestens ein erstes Trocknungsmittel aufgenommen ist. Dadurch dass in dem Vorrichtungsgehäuse neben dem mindestens einen ersten Trocknungsmittel mindestens ein weiteres Trocknungsmittel aufgenommen ist und dass das mindestens eine erste sowie das mindestens eine weitere Trocknungsmittel bei niedrigen bzw. hohen Feuchtigkeitswerten des Medienstroms eine hohe Aufnahmekapazität für Feuchte aufweist, lassen sich insbesondere dadurch, dass die Menge des jeweiligen Trocknungsmittels in Abhängigkeit der tatsächlichen Feuchtesituation des Medienstroms wahlweise einstellbar ist, eine Vielzahl der in der Praxis auftretenden Forderungen an das Trocknen eines Medienstroms in einfacher Weise erfüllen.

Das Vorrichtungsgehäuse weist einen Aufnahmeraum zur Aufnahme der mindestens zwei Trocknungsmittel auf und in dem Aufnahmeraum ist mindestens eine von dem Medienstrom durchströmbare Trenneinrichtung zum Trennen der mindestens zwei Trocknungsmittel angeordnet. Durch die Trennung der Trocknungsmittel mittels einer Trenneinrichtung bleiben zum einen die individuellen Eigenschaften der weitgehend nicht miteinander vermischten Trocknungsmittel erhalten, zum anderen erlaubt diese Trennung auch ein individuelles Austauschen der Trocknungsmittel, insbesondere dann, wenn eines der beiden Trocknungsmittel früher als das andere in seiner Wirkung stark nachgelassen hat.

Es ist vorgesehen, dass die mindestens eine Trenneinrichtung in dem Aufnahmeraum wählbar anordenbar ist und dergestalt den Aufnahmeraum in mindestens zwei Aufnahmevolumina zur jeweiligen Aufnahme der mindestens zwei Trocknungsmittel aufteilt. Dadurch, dass mit Hilfe der wählbar anordenbaren Trenneinrichtung die Aufnahmevolumina des Aufnahmeraumes für die jeweiligen Trocknungsmittel beeinflussbar sind, kann eine der beabsichtigten Betriebssituation, insbesondere der Feuchtesituation des Medienstroms, der Art des Medienstroms, den zu verwendeten Tröcknungsmitteln etc. angepasste Aufteilung des Aufnahmeraums vorgenommen werden. Dadurch, dass diese Aufteilung an der entsprechenden Vorrichtung, also sprich vor Ort vorgenommen wird, können ansonsten gleichartig gestaltete Vorrichtungen für die unterschiedlichsten Einsatzbereiche verwendet werden, da sie sich jeweils den benötigten Aufnahmevolumina anpassen lassen. Des Weiteren ist eine solche Ausführung auch kostengünstig, da große Vorräte an den Trocknungsmitteln beschafft werden können, während deren individuell in den Aufnahmeraum einzubringendes Volumen für jede einzelne Vorrichtung getrennt festlegbar ist.

Bei einer Ausführungsform der Erfindung ist vorgesehen, dass ein Trocknungsmittel ein Molsieb, auch als Molekularsieb bezeichnet, mit hoher Aufnahmekapazität für Feuchte bei niedrigen Feuchtigkeitswerten des Medienstroms, und dass mindestens ein weiteres Trocknungsmittel ein Silicagel mit hoher Aufnahmekapazität für Feuchte bei hohen Feuchtigkeitswerten des Medienstroms ist. Sowohl Molsieb als auch Silicagel sind Trocknungsmittel, die sich bei gattungsgemäßen Vorrichtungen durch ihre hohe Wirksamkeit bereits bewährt haben, sich in ihren individuellen Eigenschaften jedoch durchaus unterscheiden. So ist bei einem Molsieb eine hohe Aufnahmekapazität für Feuchte bereits bei niedrigen relativen Feuchtewerten des Medienstroms gegeben, während bei einem Silicagel eine besonders hohe Aufnahmekapazität für Feuchte bei hohen relativen Feuchten des Medienstroms gegeben ist. Durch die Kombination von mindestens zwei Trocknungsmitteln in einer Vorrichtung können die individuellen Eigenschaften der jeweiligen Trocknungsmittel derartig kombiniert werden, dass die Vorrichtung zum Trocknen des Medienstroms das Trocknen in Abhängigkeit von der tatsächlichen Feuchtesituation des Medienstroms in möglichst effektiver Weise durchführt. Insbesondere lassen sich hierdurch Vorrichtungen zum Trocknen des Medienstroms so mit Trocknungsmitteln versehen, dass über einen möglichst breiten Bereich von relativen Feuchten des Medienstroms eine hohe Aufnahmekapazität für Feuchte des Medienstroms gewährleistet ist.

Bei einer Ausführungsform der Erfindung ist vorgesehen, dass die mindestens eine Trenneinrichtung in Richtung der Längserstreckung des Aufnahmeraums zur Aufteilung desselben an wählbaren Positionen anordenbar ist. Hierdurch ist insbesondere bei einer zylinderförmigen Ausgestaltung des Aufnahmeraums mit im Wesentlichen gleichbleibender Querschnittsfläche die Aufteilung des Aufnahmeraums vereinfacht, da je nach gewählter Position einer Trenneinrichtung, deren relative Lage zur Längserstreckung des Aufnahmeraums das einbringbare Aufnahmevolumen des betreffenden Trocknungsmittels relativ zum Gesamtvolumen des Aufnahmeraums leicht vorgebbar ist. Dabei ergibt sich hieraus die individuelle Anpassbarkeit der Vorrichtung, da bei jeder Vorrichtung für sich in Abhängigkeit von der gewählten Position der Trenneinrichtung die Aufteilung des Aufnahmeraums individuell vornehmbar ist.

Bei einer Ausführungsform der Erfindung ist vorgesehen, dass die mindestens eine Trenneinrichtung scheibenförmig ausgeführt und mit vom Medienstrom durchströmbaren Durchgangsöffnungen versehen ist. Durch das Vorsehen von durchströmbaren Durchgangsöffnungen in scheibenförmig ausgeführten Trenneinrichtungen ist gewährleistet, dass ein Medienstrom die mindestens eine Trenneinrichtung durchströmen kann und dergestalt zunächst ein erstes und dann ein weiteres Trocknungsmittel auf den Medienstrom einwirken kann.

Bei einer Ausführungsform der Erfindung ist vorgesehen, dass das Vorrichtungsgehäuse auf der Anströmseite des Aufnahmeraums gelegen mit mindestens einer Einlasseinrichtung zum Einlassen des Medienstroms von außerhalb des Vorrichtungsgehäuses in das Vorrichtungsgehäuse versehen ist, und dass die mindestens eine Einlasseinrichtung in eine außerhalb des Aufnahmeraums und innerhalb des Vorrichtungsgehäuses angeordnete Zwischenkammer zur Medienmassenberuhigung mündet. Hierbei können für die Durchgangsöffnungen jeweils gleiche oder unterschiedliche Größen vorgesehen sein; auch ist es möglich, durch ein gewähltes Anordnungsmuster gleicher oder unterschiedlicher Durchgangsöffnungen ein gewünschtes Durchströmungsprofil der Trenneinrichtung einzustellen, das insbesondere für ein möglichst gleichmäßiges Anströmen eines in Strömungsrichtung nach der Trenneinrichtung angeordneten Trocknungsmittels nützlich ist. Bei einer Trenneinrichtung, die in Form einer Kreisscheibe ausgeführt ist, kann für die Durchgangsöffnungen vorgesehen sein, dass diese durch radial verlaufende Stege und in Umfangsrichtung verlaufende Stege begrenzt sind und die Größe der Durchgangsöffnungen bezogen auf ein Zentrum der Trenneinrichtung in radialer Richtung von innen nach außen zunimmt.

Bei einer Ausführungsform der Erfindung ist vorgesehen, dass zwischen der Zwischenkammer zur Medienmassenberuhigung und der Anströmseite des Aufnahmeraums gelegen eine Filtereinrichtung, insbesondere in Form eines scheibenförmigen Filterschaums zur Medienverteilung angeordnet ist. Bei der Einlasseinrichtung kann es sich insbesondere um ein Einlassventil handeln, so dass über die Einlasseinrichtung zwar der Medienstrom in das Vorrichtungsgehäuse eindringen, nicht jedoch dieses über die Einlasseinrichtung verlassen kann. Eine derartige Funktion der Einlasseinrichtung lässt sich beispielsweise durch ein Rückschlagventil realisieren. Die Zwischenkammer zur Luftmassenberuhigung dient u.a. dazu, dass der durch die Einlasseinrichtung eingelassene Medienstrom sich in der Zwischenkammer gleichmäßig verteilen kann, um diese im weiteren Strömungsverlauf möglichst gleichverteilt über den Strömungsquerschnitt zu verlassen.

Bei einer Ausführungsform der Erfindung ist vorgesehen, dass auf der Abströmseite des Aufnahmeraums zwischen diesem und einem endseitigen Abschluss des Vorrichtungsgehäuses eine weitere Filtereinrichtung, insbesondere ein Filterschaum zum Schüttungsausgleich aufgenommenen Trocknungsmittels angeordnet ist. Ein Filterschaum mit seinen unregelmäßig verteilten Poren bzw. Luftkanälen trägt zu einer gleichmäßigen Verteilung des den Filterschaum anströmenden Mediums, so dass dieses den Filterschaum abströmseitig weitgehend homogen über den Strömungsquerschnitt verteilt verlässt. Hierdurch wird ein gleichmäßiges Anströmen von den in den Aufnahmeraum eingebrachten Trocknungsmitteln unterstützt. Des Weiteren kann die dahingehende Filtereinrichtung auch dem Fernhalten von feinem Staub oder sonstigen Verunreinigungen in dem in die Vorrichtung eingelassenen Medium dienen. Sofern abströmseitig an dem Filterschaum ein Trocknungsmittel in direktem Kontakt anliegt, ist durch den Filterschaum auch wirksam vermieden, dass das Trocknungsmittel oder einzelne kleine Partikel davon aus dem Aufnahmeraum in die Zwischenkammer zur Luftmassenberuhigung diese am oberen Ende des Aufnahmeraums und diesen begrenzend angeordnet sind. Dergestalt kann bei befülltem Aufnahmeraum dieser Filterschaum in gewissen Grenzen einen Druck auf das eingefüllte Trocknungsmittel ausüben, dass dergestalt auch beim Transport der Vorrichtung zum Einsatzort im Wesentlichen seine Lage beibehalten wird, insbesondere eine in Bezug auf die Längserstreckung des Aufnahmeraums konstante Höhe des eingebrachten Trocknungsmittels gewährleistet ist.

Bei einer Ausführungsform der Erfindung ist vorgesehen, dass die eine und die weitere Filtereinrichtung auf ihrer dem Aufnahmeraum jeweils abgewandten Seite jeweils in Anlage an eine Siebplatte bringbar sind. Durch die Abstützung der einen und der weiteren Filtereinrichtung durch jeweils eine Siebplatte und zwar auf derjenigen Seite, die dem Aufnahmeraum abgewandt ist, ist insbesondere eine Erhöhung der Stabilität der Filterschäume gegeben, so dass in Einbaulage insbesondere der Filterschaum zur Medienverteilung nicht durch gegebenenfalls auf ihm lastendes Trocknungsmittel aus seiner gewünschten Lage gebracht wird, sondern durch die Siebplatte abgestützt und der in Einbaulage obere Filterschaum zum Schüttungsausgleich durch die benachbarte Siebplatte ebenfalls mechanisch gestützt in engem Kontakt an das im Aufnahmeraum aufgenommene Trocknungsmittel gebracht ist.

Bei einer Ausführungsform der Erfindung ist vorgesehen, dass der Aufnahmeraum in Richtung der Längserstreckung des Vorrichtungsgehäuses von einem Medienleiter durchgriffen ist, der sich zwischen den an der einen und der anderen Filtereinrichtung anliegenden Siebplatten erstreckt, und dass der Innenraum des Medienleiters mit einer Anschlusseinrichtung zum Anschließen der Vorrichtung mit einem mit getrocknetem Medium zu versorgenden Behälter kommuniziert. Über den dahingehende Medienleiter durchströmt das getrocknete Medium das Vorrichtungsgehäuse in Richtung seiner Längserstreckung. Bei dem Medienleiter handelt es sich im einfachsten Fall um ein Rohrstück mit zylindrischer Querschnittsfläche, das an seinen Stirnseiten gegebenenfalls mit Festlegemitteln versehen ist, die seine Montage im Vorrichtungsgehäuse vereinfachen.

Bei einer Ausführungsform der Erfindung ist vorgesehen, dass in dem endseitigen Abschluss des Vorrichtungsgehäuses ein hülsenförmiges Filterelement angeordnet ist, welches sich zwischen der an der anderen Filtereinrichtung anliegenden Siebplatte und einer an dem endseitigen Abschluss ausgebildeten kappenförmigen Begrenzung des Vorrichtungsgehäuses in jeweils dichtender Anlage erstreckt und dessen Innenraum mit dem Medienleiter kommuniziert. Bei dem hülsenförmigen Filterelement kann es sich insbesondere um ein Luftfilterelement mit einer Feinheit von ungefähr 3 *µ*m handeln, welches in Strömungsrichtung als letztes Filterelement der Anschlusseinrichtung vorgeschaltet eine Feinfiltrierung des Mediums vor dessen Einströmen in einen angeschlossenen Behälter vornimmt. Das radial von außen angeströmte hülsenförmige Filterelement führt des Weiteren auch eine Umlenkung der Strömungsrichtung des Medienstroms durch, da dieser das hülsenförmige Filterelement in axialer Richtung verlassend in den Medienleiter eintritt. Bei der kappenförmigen Begrenzung des Vorrichtungsgehäuses handelt es sich um eine übliche Endkappe eines Filtergehäuses, die im vorliegenden Fall das Vorrichtungsgehäuse dichtend gegen die Umwelt abschließt.

Bei einer Ausführungsform der Erfindung ist vorgesehen, dass die Trenneinrichtung kreisförmig ausgeführt mit ihrem Außenwandbereich an der Innenwand des Aufnahmeraums anliegend in ihrem zentralen Bereich eine Ausnehmung aufweist und dass ein an der Ausnehmung ausgebildeter federnder Rand sich an dem Medienleiter abstützend eine wahlweise Anordnung der Trenneinrichtung an Positionen in Richtung der Längserstreckung des Aufnahmeraums erlaubt. Durch die federnde Ausführung des Randes der Ausnehmung in der Trenneinrichtung ist eine einfache lösbare Fixierung der Trenneinrichtung an dem Medienleiter möglich, insbesondere ist dergestalt ein einfaches Verschieben der Trenneinrichtung längs des Medienleiters möglich und somit eine einfache Anpassung der Aufnahmevolumina an die gegebenen Randbedingungen.

Bei einer Ausführungsform der Erfindung ist vorgesehen, dass das Vorrichtungsgehäuse außerhalb des Aufnahmeraums mit einer Auslasseinrichtung versehen ist, durch welche ein aus einem an die Vorrichtung angeschlossenen Behälter austretender Medienstrom das Vorrichtungsgehäuse nach außen verlassen kann. Über die Anschlusseinrichtung ist es des Weiteren möglich, dass auch ein Medienstrom aus dem Behälter in die Vorrichtung eindringt, jedoch wird durch die sich im Medienleiter der Vorrichtung ausbildende Luftsäule ein solcher Druck aufgebaut, dass eine im Vorrichtungsgehäuse in Einbaulage unten angeordnete Auslasseinrichtung, insbesondere ein Rückschlagventil, so rechtzeitig öffnet, dass ein Eindringen von aus dem Behälter austretendem Medium in den Aufnahmeraum der Vorrichtung wirksam vermieden ist. Bei der Verwendung eines Rückschlagventils als Auslasseinrichtung ist auch wirksam vermieden, dass aus der Umwelt eintretendes Medium durch die Auslasseinrichtung direkt in den Medienleiter und anschließend einen angeschlossenen Behälter eintreten kann, da das entsprechende Rückschlagventil in dieser Richtung sperrt.

Bei einer Ausführungsform der Erfindung ist vorgesehen, dass der Anteil an Molsieb 10 % bis 50 %, an Silicagel 90 % bis 50 %, vorzugsweise an Molsieb 25 % bis 45 %, an Silicagel 75 % bis 55 %, und besonders bevorzugt an Molsieb ungefähr 40 % und an Silicagel ungefähr 60 % der Gesamtmenge der in den Aufnahmeraum eingebrachten Trocknungsmittel beträgt. Insbesondere eine Kombination von ungefähr 40 % Molsieb und ungefähr 60 % Silicagel führt zu einem besonders günstigen Verlauf der Aufnahmefähigkeit für Feuchte über einen großen Bereich relativer Feuchte des Medienstroms. Dabei ist bei einer derartigen Kombination erreicht, dass gegenüber einem reinen Silicagel bereits bei relativen Feuchten von ungefähr 5 bis 40 % des Medienstroms eine deutlich höhere Aufnahmefähigkeit für Feuchte der Kombination von Trocknungsmitteln gegeben ist.

Nachstehend ist die Erfindung anhand eines in den Zeichnungen dargestellten Ausführungsbeispiels im Einzelnen erläutert. Es zeigen:
- Fig. 1: schematisch und nicht maßstäblich sowie teilweise geschnitten dargestellt eine perspektivische Darstellung einer erfindungsgemäßen Vorrichtung;
- Fig. 2: einen vergrößerten Ausschnitt der Fig. 1; und
- Fig. 3: in der Art eines Diagramms die Aufnahmefähigkeit Y verschiedener Trocknungsmittel in Abhängigkeit der relativen Feuchte eines Medienstroms X.

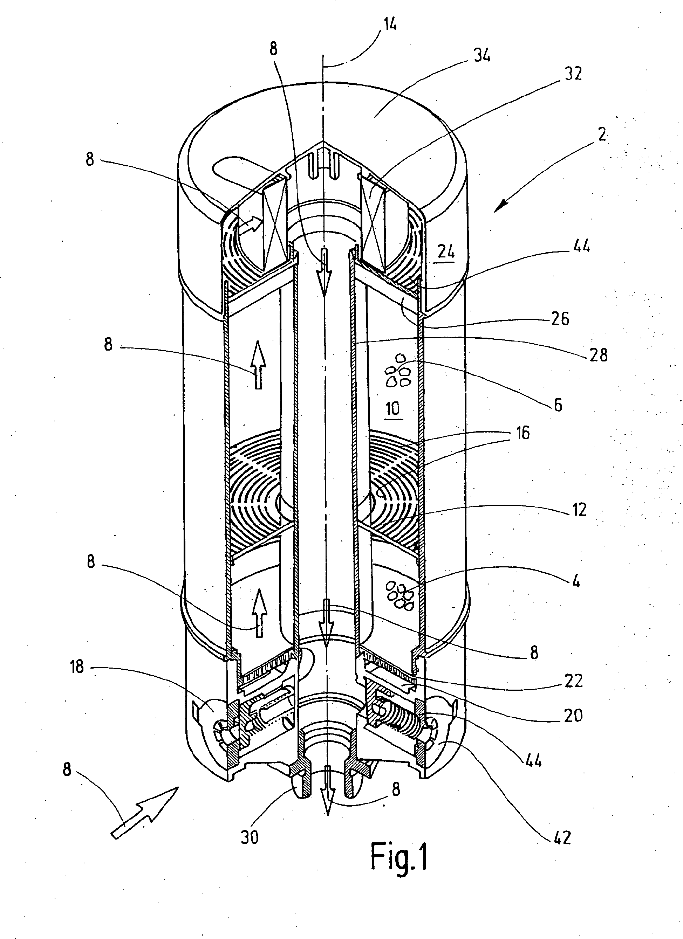

Fig. 1 zeigt eine Vorrichtung zum Trocknen eines Medienstroms mit einem Vorrichtungsgehäuse 2, in dem ein erstes Trocknungsmittel 4 sowie ein weiteres Trocknungsmittel 6 aufgenommen ist, das bei niedrigen bzw. hohen Feuchtigkeitswerten des Medienstroms 8 eine hohe Aufnahmekapazität für Feuchte aufweist. Die Menge des jeweiligen Trocknungsmittels 4 oder 6 ist in Abhängigkeit der tatsächlichen Feuchtesituation des Medienstroms 8 wahlweise eingestellt.

Das Vorrichtungsgehäuse 2 weist in einem mittleren Abschnitt einen Aufnahmeraum 10 zur Aufnahme der mindestens zwei Trocknungsmittel 4 und 6 auf. Bei der Darstellung nach Fig. 1 befindet sich am Rand des unteren Drittels des Aufnahmeraums 10 angeordnet eine Trenneinrichtung 12, die von dem Medienstrom 8 durchströmbar und zum Trennen der mindestens zwei Trocknungsmittel 4 und 6 voneinander vorgesehen ist.

Für eines der Trocknungsmittel 4 oder 6 ist hierbei vorgesehen, ein Molsieb mit hoher Aufnahmekapazität für Feuchte bei niedrigen Feuchtigkeitswerten des Medienstroms 8 und für das andere Trocknungsmittel 6 bzw. 4 ein Silicagel mit hoher Aufnahmekapazität für Feuchte bei hohen Feuchtigkeitswerten des Medienstroms 8 in den Aufnahmeraum 10 einzubringen.

Die Trenneinrichtung 12 ist in dem Aufnahmeraum 10 wählbar anordenbar und der Aufnahmeraum 10 ist dergestalt durch die Trenneinrichtung 12 in mindestens zwei Aufnahmevolumina zur jeweiligen Aufnahme der mindestens zwei Trocknungsmittel 4,6 aufgeteilt. Bei der Darstellung nach Fig. 1 befindet sich ein erstes Aufnahmevolumen des Aufnahmeraums 10 unterhalb der Trenneinrichtung 12 und ein weiteres Aufnahmevolumen des Aufnahmeraums 10 oberhalb der Trenneinrichtung 12.

Die Trenneinrichtung 12 ist in Richtung der Längserstreckung des Aufnahmeraums 10, d.h. in Richtung von dessen Längsachse 14, die mit der Längsachse des Vorrichtungsgehäuses 2 zusammenfällt, an wählbaren Positionen anordenbar. Hierdurch ist eine wählbare Aufteilung des Aufnahmeraums 10 in die mindestens zwei Aufnahmevolumina ermöglicht. Bei der Darstellung gemäß Fig. 1 ist für die Aufnahme des Trocknungsmittels 4 ca. ein Drittel des Aufnahmeraums 10 und für die Aufnahme des Trocknungsmittels 6 ca. zwei Drittel des Aufnahmeraums 10 vorgesehen.

Die scheibenförmig ausgeführte Trenneinrichtung 12 weist Durchgangsöffnungen 16 auf, durch welche der Medienstrom 8 strömen kann. Auf der Anströmseite des Aufnahmeraums 10 liegt mindestens eine Einlasseinrichtung 18 zum Einlassen des Medienstroms von außerhalb des Vorrichtungsgehäuses 2 in das Vorrichtungsgehäuse 2. Die mindestens eine Einlasseinrichtung 18 mündet hierbei in eine außerhalb des Aufnahmeraums 10 und innerhalb des Vorrichtungsgehäuses 2 angeordnete Zwischenkammer 20. Die Zwischenkammer 20 dient zur Medienmassenberuhigung des durch die Einlasseinrichtung 18 eingeströmten Medienstroms 8. Das zu trocknende Medium kann hierbei insbesondere durch Luft aus der Umgebung der Vorrichtung gebildet sein.

Zwischen der Zwischenkammer 20 und der Anströmseite des Aufnahmeraums 10 gelegen ist eine erste Filtereinrichtung 22 angeordnet, die als scheibenförmig ausgebildeter Filterschaum der Medienverteilung des aus der Zwischenkammer 20 ausströmenden Medienstroms 8 dient. Auf der Abströmseite des Aufnahmeraums 10 ist zwischen diesem und einem endseitigen Abschluss 24 des Vorrichtungsgehäuses 2 eine weitere Filtereinrichtung 26 angeordnet, welche als Filterschaum ausgebildet insbesondere dem Schüttungsausgleich von in den Aufnahmeraum eingebrachten Trocknungsmittel 6 bzw. 4 dient.

Wie in der Fig. 1 gezeigt, sind die eine und die weitere Filtereinrichtung 22 und 26 auf ihrer dem Aufnahmeraum 10 jeweils abgewandten Seite jeweils in Anlage an eine Siebplatte 44 bringbar. Die Siebplatten 44 können in ähnlicher Weise wie die Trenneinrichtung 12 mit Durchgangsöffnungen versehen sein, durch welche der Medienstrom 8 durchströmen kann.

Der Aufnahmeraum 10 ist in Richtung der Längserstreckung des Vorrichtungsgehäuses insbesondere koaxial zu dessen Längsachse 14 von einem Medienleiter 28 durchgriffen, der bei der in der Fig. 1 gezeigten bevorzugten Einbaulage der Vorrichtung nach unten hin mit einer Anschlusseinrichtung 30 zum Anschließen der Vorrichtung mit einem mit getrocknetem Medium zu versorgenden Behälter (nicht dargestellt) kommuniziert. Der Medienleiter 28 erstreckt sich zwischen den an der einen und der anderen Filtereinrichtung 22 und 26 anliegenden Siebplatten 44.

In dem endseitigen Abschluss 24 des Vorrichtungsgehäuses 2 ist ein zylinderförmiges Filterelement 32 angeordnet, welches sich zwischen der an der anderen Filtereinrichtung 26 anliegenden Siebplatte 44 und einer an dem endseitigen Abschluss 24 ausgebildeten kappenförmigen Begrenzung 34 des Vorrichtungsgehäuses 2 in jeweils dichtender Anlage erstreckt und dessen Innenraum mit dem Medienleiter 28 kommuniziert. Zwischen dem Filterelement 32 und der kappenförmigen Begrenzung 34 des Vorrichtungsgehäuses 2 und/oder dem Filterelement 32 und der an der anderen Filtereinrichtung 26 anliegenden Siebplatte 44 kann hierbei unter Gewährleistung der dichtenden Anlage jeweils eine Dichtung eingefügt sein.

Wie in der Fig. 1 gezeigt, sind die eine und die weitere Filtereinrichtung 22 und 26 auf ihrer dem Aufnahmeraum 10 jeweils abgewandten Seite durch jeweils eine Trenneinrichtung 12 abgestützt.

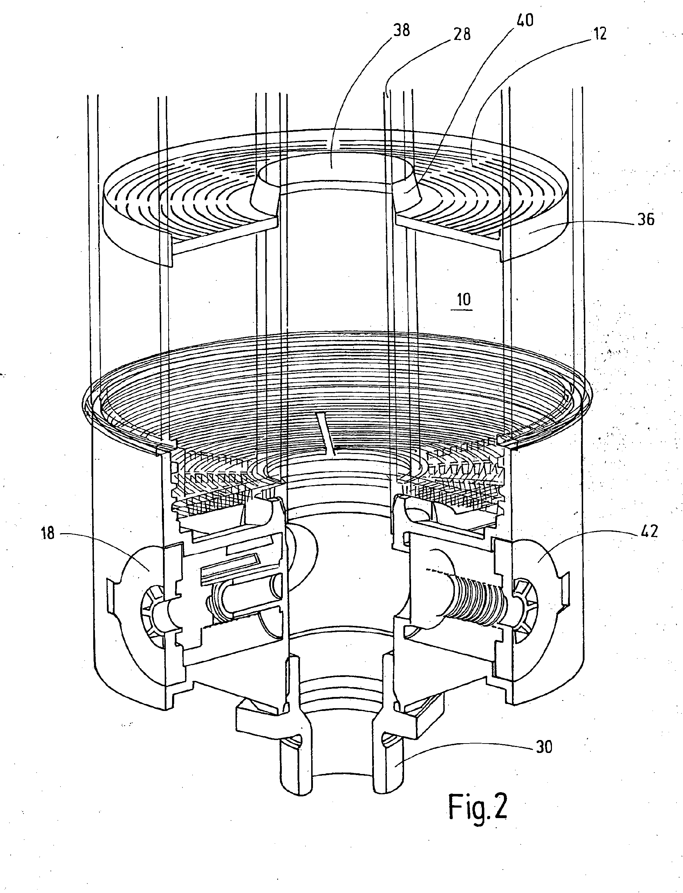

Wie insbesondere der Fig. 2 zu entnehmen ist, ist die Trenneinrichtung 12 kreisförmig ausgeführt und mit ihrem Außenwandbereich 36 an der Innenwand des Aufnahmeraums 10 anliegend in ihrem zentralen Bereich mit einer Ausnehmung 38 versehen. An der Ausnehmung 38 ist hierbei ein Rand, insbesondere ein federnder Rand.40 ausgebildet, der sich an dem Medienleiter 28 federnd abstützend eine wahlweise Anordnung der Trenneinrichtung 12 an Positionen in Richtung der Längserstreckung des Aufnahmeraums 10 erlaubt.

Außerhalb des Aufnahmeraums 10 weist das Vorrichtungsgehäuse in seinem gemäß der Darstellung in Fig. 1 unteren Abschnitt eine Auslasseinrichtung 42 auf, durch welche ein aus einem an die Vorrichtung angeschlossenen Behälter (nicht dargestellt) austretender Medienstrom (nicht dargestellt) das Vorrichtungsgehäuse 2 nach außen verlassen kann. Ein derartiger Medienstrom würde die Anschlusseinrichtung 30 gegen den dort dargestellten Pfeil für den Medienstrom 8 durchlaufen und aufgrund der sich im Medienleiter 28 ausbildenden Luftsäule nicht in den Aufnahmeraum 10 eindringen, sondern das Vorrichtungsgehäuse über die Auslasseinrichtung 42 verlassen. Als Auslasseinrichtung 42 kann hierbei insbesondere ein Rückschlagventil vorgesehen sein, durch das ein Eindringen von Medium von außerhalb der Vorrichtung in die Vorrichtung durch die Auslasseinrichtung wirksam unterdrückt ist, während der Austritt eines aus einem angeschlossenen Behälter austretenden Medienstroms über die Auslasseinrichtung nach außen möglich ist.

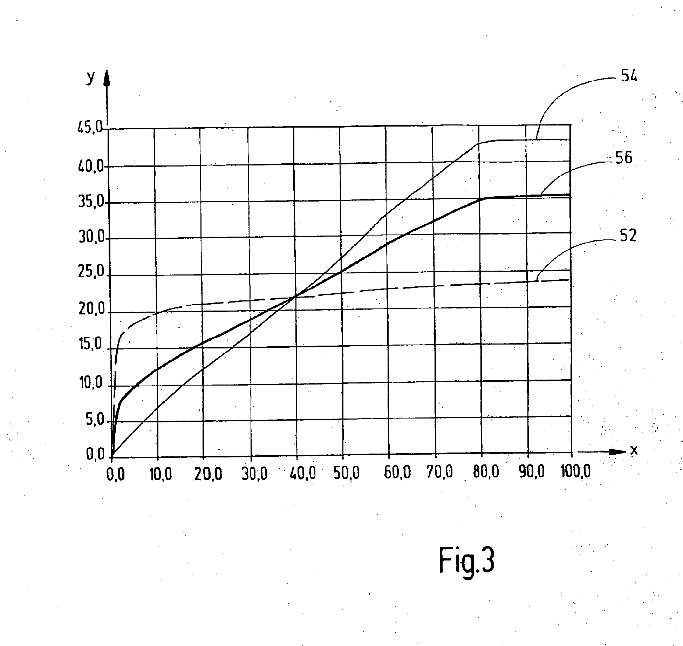

In der Fig. 3 dargestellt ist die Aufnahmefähigkeit bzw. Wasseradsorption Y in Prozent eines Molsiebs 52, eines Silicagels 54 sowie einer Kombination 56 der beiden Trocknungsmittel 52 und 54 in Abhängigkeit der relativen Feuchte X in Prozent des Medienstroms dargestellt. Als besonders vorteilhaft hat sich herausgestellt, eine Kombination von 60 % Silicagel und 40 % Molsieb zu verwenden; der Verlauf der Wasseradsorption in Abhängigkeit der relativen Feuchte dieser Kombination zweier Trocknungsmittel ist durch die Kurve 56 in der Fig. 3 wiedergegeben. Dabei ist die bereits bei niedrigen relativen Feuchten gegebene hohe Wasseradsorption des Molsiebs mit einer hohen Wasseradsorption des Silicagels bei hohen relativen Feuchten des Silicagels kombiniert. Wie der Fig. 3 zu entnehmen, ist bei einer relativen Feuchte von ca. 40 % die Wasseradsorption des Molsiebs ungefähr gleich der Wasseradsorption des Silicagels, während zu niedrigeren relativen Feuchten hin das Molsieb eine höhere und zu höheren relativen Feuchten hin das Silicagel eine höhere Wasseradsorption aufweist. Der relativ steile Anstieg der Wasseradsorption des Molsiebs bereits bei sehr niedrigen relativen Feuchten X bewirkt, dass auch die Kombination der beiden Trocknungsmittel bei niedrigen relativen Feuchtewerten bereits eine gegenüber einem reinen Silicagel erhöhte Wasseradsorption aufweist. Bei der Ermittlung der in der Fig. 3 dargestellten Verläufe der Wasseradsorption betrug für die beiden Trocknüngsmitel die Stampfdichte jeweils 700 g/l.

## Patentansprüche

1. Vorrichtung zum Trocknen eines Medienstroms (8), insbesondere eines Luftstroms, mit einem Vorrichtungsgehäuse (2), in dem mindestens ein erstes sowie mindestens ein weiteres Trocknungsmittel (4, 6) aufgenommen ist, welche bei niedrigen bzw. hohen Feuchtigkeitswerten des Medienstroms (8) eine hohe Aufnahmekapazität für Feuchte aufweisen, wobei die Menge des jeweiligen Trocknungsmittels (4, 6) in Abhängigkeit der tatsächlichen Feuchtesituation des Medienstroms (8) wahlweise einstellbar ist, und wobei das Vorrichtungsgehäuse (2) einen Aufnahmeraum (10) zur Aufnahme der mindestens zwei Trocknungsmittel (4, 6) aufweist, **dadurch gekennzeichnet, dass** in dem Aufnahmeraum (10) mindestens eine von dem Medienstrom (8) durchströmbare Trenneinrichtung (12) zum Trennen der mindestens zwei Trocknungsmittel (4, 6) angeordnet ist und dass die mindestens eine Trenneinrichtung (12) in dem Aufnahmeraum (10) wählbar anordenbar ist und dergestalt den Aufnahmeraum (10) in mindestens zwei Aufnahmevolumina zur jeweiligen Aufnahme der mindestens zwei Trocknungsmittel (4, 6) aufteilt.

2. Vorrichtung nach Anspruch 1, **dadurch gekennzeichnet, dass** ein Trocknungsmittel (4) ein Molsieb mit hoher Aufnahmekapazität für Feuchte bei niedrigen Feuchtigkeitswerten des Medienstroms, und dass mindestens ein weiteres Trocknungsmittel (6) ein Silicagel mit hoher Aufnahmekapazität für Feuchte bei hohen Feuchtigkeitswerten des Medienstroms (8) ist.

3. Vorrichtung nach Anspruch 1 oder 2, **dadurch gekennzeichnet, dass** die mindestens eine Trenneinrichtung (12) in Richtung der Längserstreckung des Aufnahmeraums (10) zur Aufteilung desselben an wählbaren Positionen anordenbar ist.

4. Vorrichtung nach einem der vorhergehenden Ansprüche, **dadurch gekennzeichnet, dass** die mindestens eine Trenneinrichtung (12) scheibenförmig ausgeführt und mit vom Medienstrom (8) durchströmbaren Durchgangsöffnungen (16) versehen ist.

5. Vorrichtung nach einem der vorhergehenden Ansprüche, **dadurch gekennzeichnet, dass** das Vorrichtungsgehäuse (2) auf der Anströmseite des Aufnahmeraums (10) gelegen mit mindestens einer Einlasseinrichtung (18) zum Einlassen des Medienstroms (8) von außerhalb des Vorrichtungsgehäuses (2) in das Vorrichtungsgehäuse (2) versehen ist, und dass die mindestens eine Einlasseinrichtung (18) in eine außerhalb des Aufnahmeraums (10) und innerhalb des Vorrichtungsgehäuses (2) angeordnete Zwischenkammer (20) zur Medienmassenberuhigung mündet.

6. Vorrichtung nach Anspruch 5, **dadurch gekennzeichnet, dass** zwischen der Zwischenkammer (20) zur Medienmassenberuhigung und der Anströmseite des Aufnahmeraums (10) gelegen eine Filtereinrichtung (22), insbesondere in Form eines scheibenförmigen Filterschaums zur Medienverteilung angeordnet ist.

7. Vorrichtung nach Anspruch 6, **dadurch gekennzeichnet, dass** auf der Abströmseite des Aufnahmeraums (10) zwischen diesem und einem endseitigen Abschluss (24) des Vorrichtungsgehäuses (2) eine weitere Filtereinrichtung (26), insbesondere ein Filterschaum zum Schüttungsausgleich aufgenommenen Trocknungsmittels (6) angeordnet ist.

8. Vorrichtung nach Anspruch 7, **dadurch gekennzeichnet, dass** die eine und die weitere Filtereinrichtung (22, 26) auf ihrer dem Aufnahmeraum (10) jeweils abgewandten Seite jeweils in Anlage an eine Siebplatte (44) bringbar sind.

9. Vorrichtung nach Anspruch 8, **dadurch gekennzeichnet, dass** der Aufnahmeraum (10) in Richtung der Längserstreckung des Vorrichtungsgehäuses (2) von einem Medienleiter (28) durchgriffen ist, der sich zwischen den an der einen und der anderen Filtereinrichtung (22, 26) anliegenden Siebplatten (44) erstreckt, und dass der Innenraum des Medienleiters (28) mit einer Anschlusseinrichtung (30) zum Anschließen der Vorrichtung mit einem mit getrocknetem Medium zu versorgenden Behälter kommuniziert.

10. Vorrichtung nach Anspruch 9, **dadurch gekennzeichnet, dass** in dem endseitigen Abschluss (24) des Vorrichtungsgehäuses (2) ein hülsenförmiges Filterelement (32) angeordnet ist, welches sich zwischen der an der anderen Filtereinrichtung (26) anliegenden Siebplatte (44) und einer an dem endseitigen Abschluss (24) ausgebildeten kappenförmigen Begrenzung (34) des Vorrichtungsgehäuses (2) in jeweils dichtender Anlage erstreckt und dessen Innenraum mit dem Medienleiter (28) kommuniziert.

11. Vorrichtung nach Anspruch 10, **dadurch gekennzeichnet, dass** die Trenneinrichtung (12) kreisförmig ausgeführt mit ihrem Außenwandbereich (36) an der Innenwand des Aufnahmeraums (10) anliegend in ihrem zentralen Bereich eine Ausnehmung (38) aufweist und dass ein an der Ausnehmung (38) ausgebildeter federnder Rand (40) sich an dem Medienleiter (28) abstützend eine wahlweise Anordnung der Trenneinrichtung (12) an Positionen in Richtung der Längserstreckung des Aufnahmeraums (10) erlaubt.

12. Vorrichtung nach einem der vorhergehenden Ansprüche, **dadurch gekennzeichnet, dass** das Vorrichtungsgehäuse (2) außerhalb des Aufnahmeraums (10) mit einer Auslasseinrichtung (42) versehen ist, durch welche ein aus einem an die Vorrichtung angeschlossenen Behälter austretender Medienstrom das Vorrichtungsgehäuse (2) nach außen verlassen kann.

13. Vorrichtung nach einem der Ansprüche 2 bis 12, **dadurch gekennzeichnet, dass** der Anteil an Molsieb 10 % bis 50 %, an Silicagel 90 % bis 50 %, vorzugsweise an Molsieb 25 % bis 45 %, an Silicagel 75 % bis 55 %, und besonders bevorzugt an Molsieb 40 % und an Silicagel 60 % der Gesamtmenge der in den Aufnahmeraum (10) eingebrachten Trocknungsmittel (4, 6) beträgt.

## Claims

1. A device for drying a medium flow (8), in particular an air flow, comprising a device housing (2) in which at least a first and at least another drying agent (4, 6) are received which, at low or high moisture values of the medium flow (8), exhibit a high moisture absorption capacity, the amount of the respective drying agent (4, 6) being able to be selectively set as a function of the actual moisture that is present in the medium flow (8), and the device housing (2) having a receiving space (10) for receiving the at least two drying agents (4, 6), **characterised in that** the receiving space (10) has at least one separating device (12) through which the medium flow (8) can flow for separation of the at least two drying agents (4, 6), and that the at least one separating device (12) can be arranged arbitrarily in the receiving space (10) and thus divides the receiving space (10) into at least two receiving volumes for respectively receiving the at least two drying agents (4, 6).

2. The device according to Claim 1, **characterised in that** a drying agent (4) is a molecular sieve with a high moisture absorption capacity at low moisture values of the medium flow, and that at least another drying agent (6) is a silica gel with a high moisture absorption capacity at high moisture values of the medium flow (8).

3. The device according to Claim 1 or 2, **characterised in that** the at least one separating device (12) can be arranged at selectable positions in the direction of the longitudinal extension of the receiving space (10) for dividing said receiving space.

4. The device according to any of the preceding claims, **characterised in that** the at least one separating device (12) is designed in the form of a disc and is provided with passage openings (16) through which the medium flow (8) can flow.

5. The device according to any of the preceding claims, **characterised in that** the device housing (2), being situated on the upstream side of the receiving space (10), is provided with at least one inlet device (18) for admitting the medium flow (8) into the device housing (2) from outside of the device housing (2), and that the at least one inlet device (18) empties into an intermediate chamber (20) which is arranged outside of the receiving space (10) and inside the device housing (2) and which is intended for stabilising the medium masses.

6. The device according to Claim 5, **characterised in that** a filter device (22), in particular in the form of disc-shaped filter foam for distributing the media, is situated between the intermediate chamber (20) for stabilising the medium masses and the upstream side of the receiving space (10).

7. The device according to Claim 6, **characterised in that** an additional filter device (26), in particular a filter foam for balancing the packing of the received drying agent (6), is arranged on the downstream side of the receiving space (10) between said receiving space and an end-side closure (24) of the device housing (2).

8. The device according to Claim 7, **characterised in that** the one and the other filter device (22, 26) can be brought into contact with a sieve plate (44) on the side of said filter device that faces away from the receiving space (10).

9. The device according to Claim 8, **characterised in that** a medium conductor (28), which extends between the sieve plates (44) resting against the one and the other filter device (22, 26), extension through the receiving space (10) in the direction of the longitudinal extension of the device housing (2), and that the interior of the medium conductor (28) communicates with a connecting device (30) for connecting the device to a container to be supplied with dried medium.

10. The device according to Claim 9, **characterised in that** a sleeve-shaped filter element (32) is arranged in the end-side closure (24) of the device housing (2) and that the sleeve-shaped filter element extends in sealing contact between the sieve plate (44), resting against the other filter device (26), and a cap-shaped limiting element (34) of the device housing (2) that is designed as an end-side closure (24) and its interior communicates with the medium conductor (28).

11. The device according to Claim 10, **characterised in that** the central region of the separating device (12), being designed in the form of a circle and resting with its outer wall region (36) against the inner wall of the receiving space (10), has a recess (38), and that a flexible edge (40), formed on the recess (38) and supported on the medium conductor (28), allows a selective arrangement of the separating device (12) at positions in the direction of the longitudinal extension of the receiving space (10).

12. The device according to any of the preceding claims, **characterised in that** the device housing (2) is provided with an outlet device (42) outside of the receiving space (10) through which a medium flow, issuing from a container attached to the device, can exit the device housing (2) to the exterior.

13. The device according to any of Claims 2 to 12, **characterised in that** the molecular sieve content ranges from 10% to 50%, the silica gel content ranges from 90% to 50%, and preferably the molecular sieve content ranges from 25% to 45% and the silica gel content ranges from 75% to 55%, and particularly preferably the molecular sieve content is 40% and the silica gel content is 60% of the total amount of the drying agents (4, 6) introduced into the receiving space (10).

## Revendications

1. Dispositif de séchage d'un courant (8) de fluide, notamment d'un courant d'air, comprenant une enveloppe (2) de dispositif, dans laquelle est reçu au moins un premier, ainsi qu'au moins un autre agent (4, 6) déshydratant, qui ont, pour des valeurs d'humidité petites ou respectivement grandes du courant (8) de fluide, une grande capacité d'absorption de l'humidité, la quantité de l'agent (4, 6) déshydratant respectif pouvant être réglée au choix en fonction de l'état d'humidité réelle du courant (8) de fluide et l'enveloppe (2) du dispositif comportant un espace (10) de réception des au moins deux agents (4, 6) déshydratants, **caractérisé en ce qu'**il est disposé, dans l'espace (10) de réception, au moins un dispositif (12) de séparation des au moins deux agents (4, 6) déshydratants, qui peut être traversé par le courant (8) de fluide, et **en ce que** le au moins un dispositif (12) de séparation peut être disposé au choix dans l'espace (10) de réception et subdivise ainsi l'espace (10) de réception en au moins deux volumes de réception pour la réception respective des au moins deux agents (4, 6) déshydratants.

2. Dispositif suivant la revendication 1, **caractérisé en ce qu'**un agent (4) déshydratant est un tamis moléculaire ayant une grande capacité d'absorption de l'humidité pour des valeurs d'humidité petites du courant de fluide et le au moins un autre agent (6) déshydratant est un gel de silice ayant une grande capacité d'absorption de l'humidité pour de grandes valeurs d'humidité du courant (8) de fluide.

3. Dispositif suivant la revendication 1 ou 2, **caractérisé en ce que** le au moins un dispositif (12) de séparation peut être disposé dans la direction de l'étendue longitudinale de l'espace (10) de réception, afin de le subdiviser en des positions au choix.

4. Dispositif suivant l'une des revendications précédentes, **caractérisé en ce que** le au moins un dispositif (12) de séparation est sous la forme d'un disque et est pourvu d'ouvertures (16) de passages, par lesquelles le courant (8) de fluide peut passer.

5. Dispositif suivant l'une des revendications précédentes, **caractérisé en ce que** l'enveloppe (2) du dispositif est pourvue, du côté d'afflux de l'espace (10) de réception, d'au moins un dispositif (18) d'entrée, pour l'entrée du courant (8) de fluide de l'extérieur de l'enveloppe (2) du dispositif dans l'enveloppe (2) du dispositif, et **en ce que** le au moins un dispositif (18) d'entrée débouche, pour la tranquillisation de la masse de fluide, dans une chambre (20) intermédiaire disposée à l'extérieur de l'espace (10) de réception et à l'intérieur de l'enveloppe (2) du dispositif.

6. Dispositif suivant la revendication 5, **caractérisé en ce qu'**un dispositif (22) de filtration, notamment sous la forme d'une mousse de filtration en forme de disque, est, pour la répartition du fluide, disposé entre la chambre (20) intermédiaire de tranquillisation de la masse de fluide et le côté d'afflux de l'espace (10) d'absorption.

7. Dispositif suivant la revendication 6, **caractérisé en ce qu'**un autre dispositif (26) de filtration, notamment une mousse de filtre, est, pour le nivellement de l'agent (6) déshydratant, disposé du côté d'évacuation de l'espace (10) de réception, entre celui-ci et une fermeture (24) du côté de l'extrémité de l'enveloppe (2) du dispositif.

8. Dispositif suivant la revendication 7, **caractérisé en ce que** le dispositif (22) de filtration et l'autre dispositif (26) de filtration peuvent être appliqués respectivement à une plaque (44) de tamis sur leurs faces éloignées respectivement de l'espace (10) de réception.

9. Dispositif suivant la revendication 8, **caractérisé en ce que** l'espace (10) de réception est traversé, dans la direction de l'étendue longitudinale de l'enveloppe (2) du dispositif, par un conduit (28) pour du fluide, qui s'étend entre les plaques (44) de tamis s'appliquant à l'un et à l'autre des dispositifs (22, 26) de filtration et **en ce que** l'intérieur du conduit (28) pour du fluide communique avec un dispositif (30) de raccord pour le raccordement du dispositif à une cuve à alimenter en le fluide séché.

10. Dispositif suivant la revendication 9, **caractérisé en ce que**, dans la fermeture (24) du côté de l'extrémité de l'enveloppe (2) du dispositif, est disposé un élément (32) filtrant en forme de manchon, qui s'étend respectivement en contact étanche entre la plaque (44) de tamis s'appliquant à l'autre dispositif (26) de filtration et une démarcation (34), en forme de chapeau et constituée sur la fermeture (24) du côté de l'extrémité, de l'enveloppe (2) du dispositif et dont l'intérieur communique avec le conduit (28) pour du fluide.

11. Dispositif suivant la revendication 10, **caractérisé en ce que** le dispositif (12) de séparation est circulaire, en ayant sa partie (26) de paroi extérieure s'appliquant à la paroi intérieure de l'espace (10) de réception, et a, dans sa partie centrale, un évidement (38) et **en ce qu'**un bord (40) élastique constitué sur l'évidement (38) permet, en s'appuyant sur le conduit (28) pour du fluide, de mettre au choix le dispositif (12) de séparation dans des positions dans la direction de l'étendue longitudinale de l'espace (10) de réception.

12. Dispositif suivant l'une des revendications précédentes, **caractérisé en ce que** l'enveloppe (2) du dispositif est pourvue à l'extérieur de l'espace (10) de réception d'un dispositif (42) de sortie, par lequel un courant de fluide sortant d'une cuve raccordée au dispositif peut quitter vers l'extérieur l'enveloppe (2) du dispositif.

13. Dispositif suivant l'une des revendications 2 à 12, **caractérisé en ce que** la proportion de tamis moléculaire représente de 10% à 50%, celle de gel de silice de 90% à 50%, de préférence celle de tamis moléculaire de 25% à 45%, celle de gel de silice de 75% à 55%, et d'une manière particulièrement préférée celle de tamis moléculaire 40% et celle de gel de silice 60% de la quantité totale des agents (4, 6) déshydratants introduits dans l'espace (10) de réception.
